# EUROPEAN PATENT APPLICATION

(11) **EP 4 345 033 A1**
(43) Date of publication of application: **03.04.2024**
(21) Application number: 23188846.2
(22) Date of filing: 01.08.2023
(51) Int. Cl.: B65G 17/00, B65G 17/46

(54) **ENDLESS TRANSPORTER WITH PARALLEL CHAINS**

(30) Priority: 28.09.2022 IT 202200019914
(71) Applicant: IMF ENGINEERING S.r.l., 20016 Pero (Milano) (IT)
(72) Inventor: LEVA, Marco Ernesto, 20148 Milano (IT); MARINACCIO, Giuseppe, 20051 Cassina de Pecchi (Milano) (IT)
(74) Representative: Rapisardi, Mariacristina

(57) **Abstract**

The endless conveyor (1) for transporting hollow workpieces (10) comprises two orthogonally parallel chains (2) connected by bars (3) supporting the hollow workpieces (10), the support bar (3) being formed by a longitudinal profile (4) shaped to an open cross-section from which spaced out shelves (5) project supporting pegs (6) for resting the hollow workpieces (10).

## Description

The present invention relates to an endless conveyor with parallel chains for transporting hollow parts and a hollow part processing plant incorporating such a conveyor , with reference in particular but not exclusively to the field of washing electric car battery cases.

In washing plants of this type, there are conveyors configured for the continuous transport of the casings, usually aluminium, through washing and rinsing stations equipped with nozzles for dispensing washing chemicals and rinsing water.

One of the main drawbacks of such known washing systems is that the parts conveyor can interfere with the jets of liquid products dispensed for washing and rinsing, with the result that the inner and outer surfaces of the enclosures are not evenly exposed to treatment.

The end result of the treatment can be so poor that already treated parts have to be passed through the washing and rinsing stations again.

In order to ensure an acceptable end result of the treatment, one could imagine appropriately reconfiguring the washing and rinsing stations to expose the parts from multiple directions to the jets of treatment liquids, but this would entail considerable construction complications and product and energy consumption that would be difficult to tolerate.

The technical task that the present invention proposes is, therefore, to realise an endless conveyor with parallel chains for transporting hollow workpieces and a hollow workpiece processing plant incorporating such a conveyor that will eliminate the complained of technical drawbacks of the known technique.

Within the scope of this technical task, one aim of the invention is to realise a system of the above-mentioned type that allows for homogenous treatment of the inner and outer surfaces of workpieces.

Another purpose of the invention is to realise a plant of the above-mentioned type that allows homogenous processing of parts with high production efficiency.

Another purpose of the invention is to realise a plant of the above-mentioned type that allows homogenous treatment of parts with high energy efficiency.

Another purpose of the invention is to realise a plant of the above-mentioned type that allows homogenous treatment of workpieces with high economy of the treatment products used.

Not the least of the aims of the invention is to realise a system of the above-mentioned type that without excessive construction complications allows homogenous treatment of parts.

The technical task, as well as these and other purposes, according to the present invention are achieved by realising an endless conveyor with two parallel chains having an upper forward branch operative for advancing hollow workpieces along a conveying direction and a lower empty return branch, said two parallel chains being orthogonally connected by support bars for the hollow workpieces, characterised by the fact that the support bar is formed by a longitudinal profile shaped in open section from which protrude spaced out shelves supporting pegs for resting the hollow workpieces.

In a preferred mode of embodiment of the invention said shelves extend from a free longitudinal edge of said shaped longitudinal profile.

In a preferred embodiment of the invention, this longitudinal profile has an open 'C'-shaped section.

In a preferred embodiment of the invention said shelves are arranged in succession along said free longitudinal edge of said shaped longitudinal profile according to at least two different spacing pitches which are repeated periodically.

In a preferred embodiment of the invention said shelves project from said free longitudinal edge of said longitudinal profile.

In a preferred mode of embodiment of the invention said pegs extend orthogonally from said shelves.

In a preferred mode of embodiment of the invention these pegs have bevelled ends to support the hollow pieces.

In a preferred mode of embodiment of the invention said pegs extend from the free end of said shelves.

Said free end of said shelves, depending on how said transport bars are mounted, may be in a rearward position in the direction opposite said direction of transport with respect to said shaped longitudinal profile, or may be in a forward position in said direction of transport with respect to said shaped longitudinal profile.

In a preferred embodiment of the invention, flanges attached to counter flanges supported by opposing links of said two chains are extended from the ends of the support bar.

These flanges, depending on how the transport bars are mounted, may be in a rear position in the transport direction in relation to said shaped longitudinal profile, or they may be in a forward position in said transport direction in relation to said shaped longitudinal profile.

The invention also relates to a hollow-piece processing plant comprising one or more processing stations fed successively by the aforementioned conveyor.

In said hollow piece treatment plant, at least one treatment station comprises a combined internal and external washing station of the hollow pieces comprising first spray nozzles positioned above an upper branch of the conveyor and oriented vertically downwards and second spray nozzles positioned below said upper branch of the conveyor and oriented vertically upwards, a longitudinal series of transverse rows of said first nozzles and a longitudinal series of transverse rows of said second nozzles being provided in the direction of transport, wherein homologous transverse rows of said first nozzles and said second nozzles are aligned in a vertical plane.

Advantageously, said moving parts pass through said vertical plane free of the encumbrance determined by the outline of the support bar; therefore, before or after the support bar supporting them has passed through said vertical plane.

The preferred, but not exclusive, application is for a treatment plant for prismatic cases of electric car batteries.

Further features and advantages of the invention will become more apparent from the description of a preferred but not exclusive form of execution of the conveyor and the treatment plant incorporating it according to the invention, illustrated by way of illustration and not limitation in the accompanying drawings, wherein:

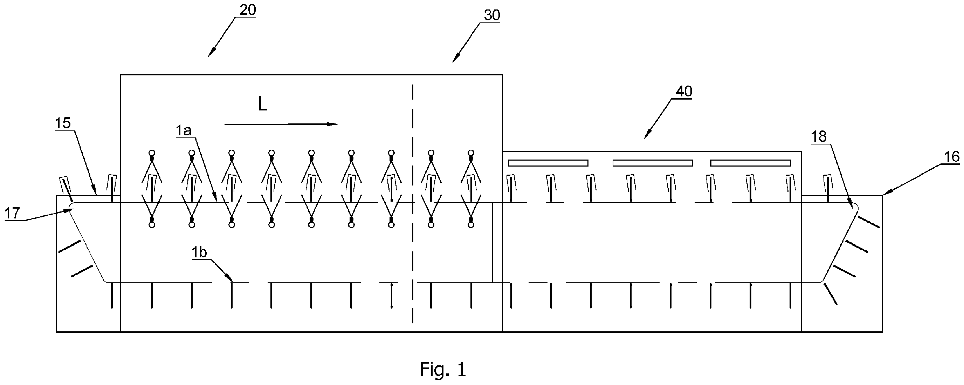

Figure 1 shows a schematic view of the system in longitudinal elevation;

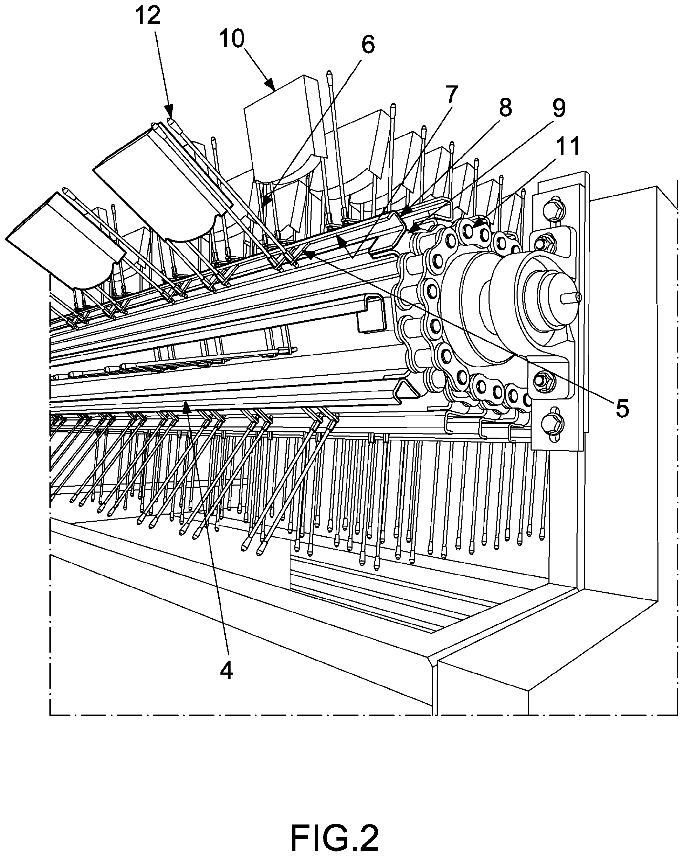

Figure 2 shows a perspective view of the front area of the implant from which the parts to be treated enter;

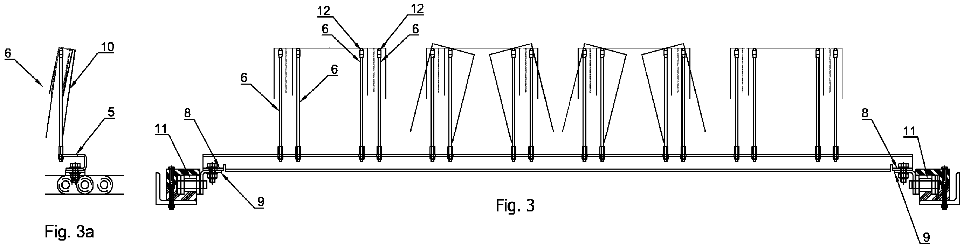

Figure 3 shows a front view of the upper branch of the conveyor;
Figure 3a shows a side elevation view of a conveyor link supporting the support bar;

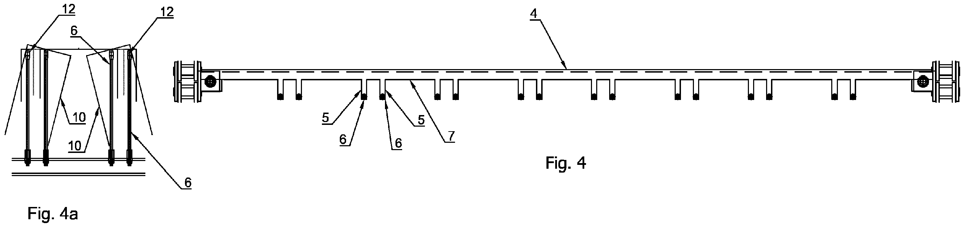

Figure 4 shows a top view of a support bar in the upper branch of the conveyor;
Figure 4a shows a frontal view of a support bar area in the upper branch of the conveyor;

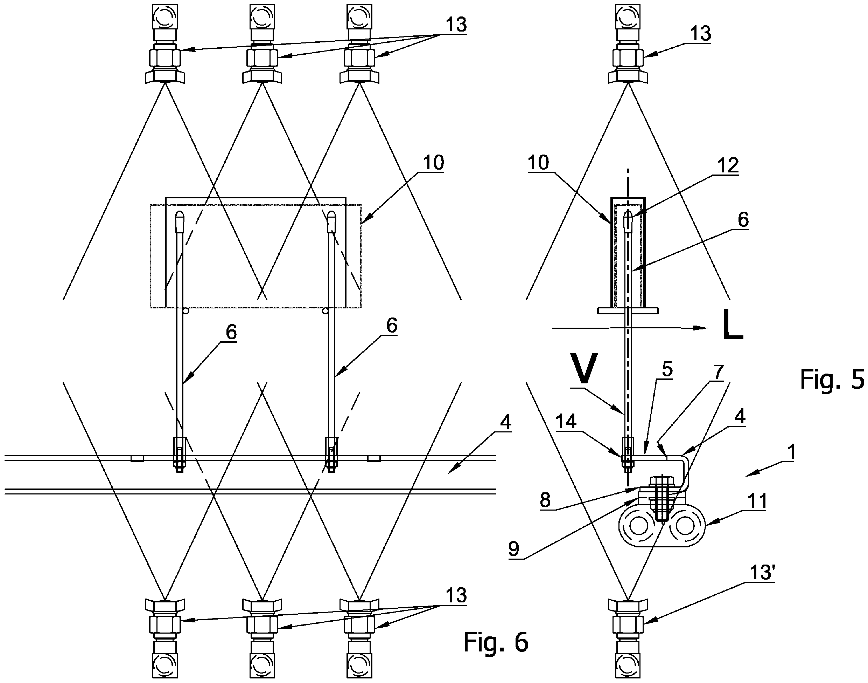

Figure 5 shows a side elevation view of a support bar of the upper conveyor branch in the washing station;
Figure 6 shows a front view of an area of a conveyor upper branch support bar in the washing station;

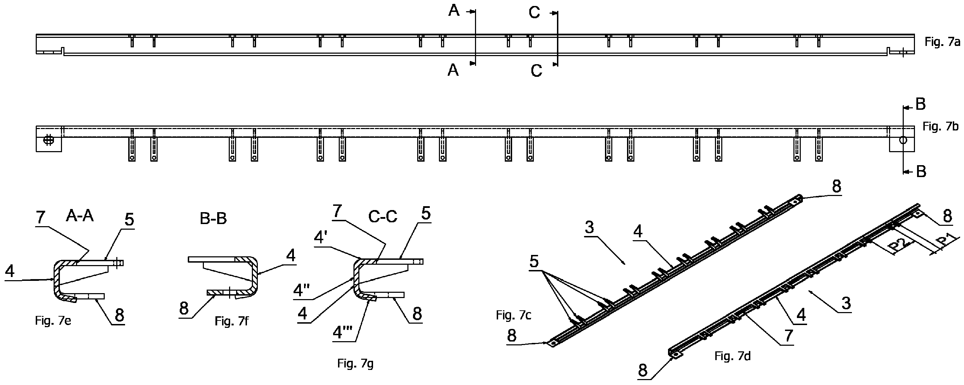

Figures 7a, 7b, 7c, 7d, 7e, 7f and respectively 7g show the support bar in side view, top view, perspective view from below, perspective view from above, in cross-section along line A-A of figure 7a, in cross-section along line B-B of figure 7b, and respectively in cross-section along line C-C of figure 7a;

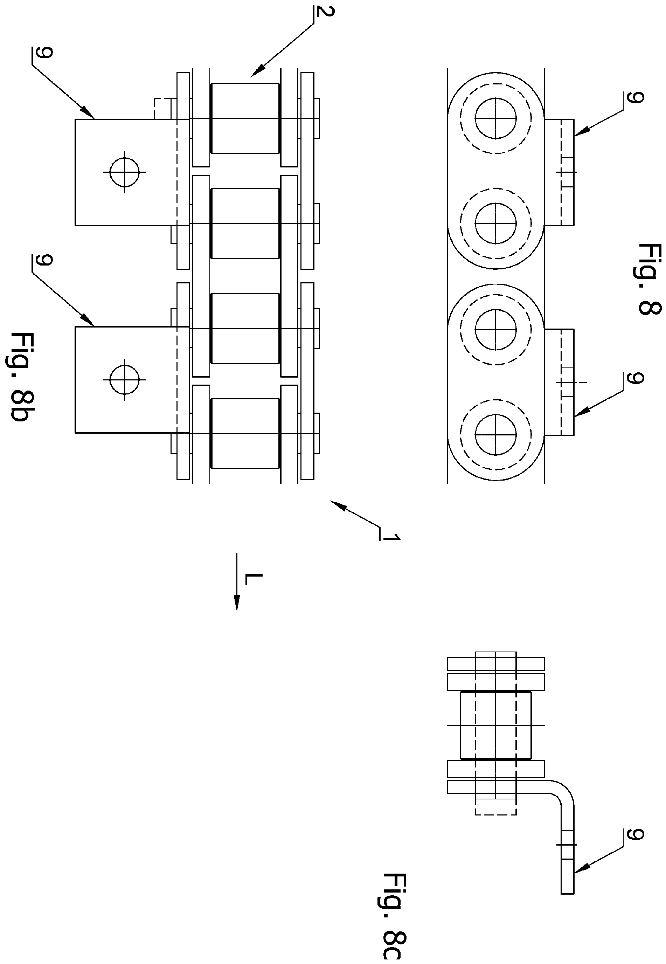

Figures 8a, 8b and respectively 8c show links of the transport chain in side, top and front views.

In the following, we will refer to the sector of washing prismatic, generally metal casings of electric car batteries, but it is clear that the field of application can be extended to the washing of hollow parts in all those sectors where an accurate, homogenous and complete washing of the internal and external surfaces of hollow parts is required.

In the case shown, the treatment plant cascades a washing station 20, a rinsing station 30 and a drying station 40.

The number of washing, rinsing and drying stations can of course also be higher.

The system also includes a conveyor 1 with parallel chains to transport hollow parts 10 in succession through stations 20, 30 and 40.

Conveyor 1 comprises two orthogonally parallel chains 2 connected by bars 3 supporting hollow pieces 10.

Conveyor 1, of the endless type, has an upper branch 1a operating to transport the hollow parts 10 from the inlet 15 of the plant to the outlet 16 of the plant and a lower branch 1b returning empty .

The upper branch 1a of the conveyor 1 runs along a straight horizontal transport direction L between a drag roller 17 of the conveyor 1 positioned at the inlet 15 of the system and a drag roller 18 of the conveyor 1 positioned at the outlet 16 of the system.

The drag rollers 17, 18 have sprockets at their ends which engage with the links 11 of the chains 2.

At least one of the drag rollers 17, 18 is motorised for chain movement 2.

Alternatively, the drag rollers 17, 18 can be non-motorised, in which case a dedicated drive can be provided operating directly on a free section of the chains 2, particularly in the lower idle return branch 1b of conveyor 1.

Advantageously, each support bar 3 is formed by a longitudinal profile 4 shaped in open cross-section from which spaced out shelves 5 project supporting pegs 6 for resting the workpieces 10.

The shelves 5 extend from a free longitudinal edge 7 of the shaped longitudinal profile 4.

In the case illustrated, as all support bars 3 have been mounted, shelves 5 project from the free longitudinal edge 7 of longitudinal profile 4 in the direction opposite to the direction of transport L; however, all support bars 3 can also be mounted in reverse, i.e. rotated 180° around a vertical axis in relation to the illustrated, so that shelves 5 project from the free longitudinal edge 7 of longitudinal profile 4 in the direction of transport L.

In the illustrated case, moreover, the free end 14 of the shelves 5 is in a rearward position in the direction opposite to the transport direction L with respect to the shaped longitudinal profile 4; however, if all the support bars 3 are mounted in reverse as shown above, the free end 14 of the shelves 5 is in a forward position in the transport direction L with respect to the shaped longitudinal profile 4.

The shelves 5 are arranged in succession along the free longitudinal edge 7 of the shaped longitudinal profile 4 according to at least two different spacing pitches P1, P2 which are repeated periodically.

Longitudinal profile 4 has a more detailed 'C'-shaped open section.

More precisely, the longitudinal profile 4 has a first longitudinal band of end 4', a second longitudinal band 4" intermediate contiguous and angled to the first longitudinal band of end 4", and a third longitudinal band of end 4" contiguous and angled to the second longitudinal band 4".

All 4', 4" bands are flat, the second 4" band and the first 4" band form a right dihedral angle, while the second 4" band and the third 4" band form an obtuse dihedral angle.

The first band 4' defines the free longitudinal edge 7 of the shaped longitudinal profile 4.

The shelves 5 are coplanar to the first band 4' and extend in a direction orthogonal to the free longitudinal edge 7 of the shaped longitudinal profile 4.

When support bar 3 is at upper branch 1a of conveyor 1, the first band 4' is arranged in a horizontal plane and overlaps the third band 4".

Pegs 6 extend orthogonally from shelves 5.

Pegs 6 extend from the free end 14 of shelves 5 .

The pegs 6 in particular extend upwards from the free end 14 of the shelves 5 when the support bar 3 is at the upper branch 1a of the conveyor 1.

Pegs 6 have bevelled ends 12 to support hollow pieces 10.

From the ends of the support bar 3 are extended flanges 8 fixed to counter flanges 9 supported by opposing links 11 of the two chains 2.

In particular, flanges 8 are flat, are positioned at the ends of the third 4" band, and extend parallel to and facing the first 4" band.

Depending on how the conveyor bars 3 are mounted, at the upper branch 1a of the conveyor 1 the flanges 8 can be either set back in the transport direction L in relation to the shaped longitudinal profile 4 (solution shown), or set forward in the transport direction L (solution not shown).

Stations 20, 30, 40 provide combined internal and external treatment of hollow parts 10.

Each station 20, 30 includes first spray nozzles 13 positioned above the upper branch 1a of conveyor 1 and oriented vertically downwards and second spray nozzles 13' positioned below the upper branch 1a of conveyor 1 and oriented vertically upwards.

More precisely, a longitudinal series of transverse rows of first nozzles 13 and a longitudinal series of transverse rows of second nozzles 13' is provided in the transport direction L, where homologous transverse rows of first nozzles 13 and second nozzles 13' are aligned in a vertical plane V.

The second 13' nozzles are interposed between the upper branch 1a and the lower branch 1b of the conveyor 1.

The hollow pieces 10 to be processed are upside down, i.e. oriented with their open mouths pointing downwards and threaded onto the pegs 6 so that thanks to their weight they rest freely on the ends 12 of the pegs 6.

Specially equipped robots or traditional pick-and-place systems can be provided for loading and unloading parts 10 from conveyor 1.

Depending on size, a workpiece 10 may be supported by one or more pegs 6, adjacent or not, of the same support bar 3 and, again depending on size, several workpieces 10 may also be supported by the same support bar 3.

The spacing of the first nozzles 13 and the second nozzles 13' in their respective transverse rows is such that their delivery cones intersect before intercepting the workpieces 10 so as to ensure complete treatment of the internal and external surfaces of the workpieces 10, made possible above all by the fact that the support bars 3, due to their special configuration and arrangement, do not substantially interfere with the trajectories of the jets of treatment liquid delivered by the first nozzles 13 and the second nozzles 13'.

In fact, as is evident, in the upper branch 1a of conveyor 1 the support bar 3, depending on how it is mounted, passes completely through the vertical plane V in advance or behind the workpieces 10 it supports.

Naturally, the number and spacing of the first nozzles 13 and the second nozzles 13' in the respective cross rows are chosen in such a way as to ensure that all parts 10 supported by support bar 3 are fully wetted externally from above and internally from below.

The operation of the system according to the invention is apparent from what is described and illustrated and, in particular, is substantially as follows.

The upper branch 1a of the parallel-chain conveyor 1 2 continuously transports the workpieces 10 upright in succession through the various processing stations 20, 30, 40.

Support bars 3 ensure complete exposure of workpieces 10 to the jet of the lower 13' and upper 13' nozzles.

The pegs 6 ensure the stability of the workpieces 10 during transport and their specific ends 12 do not damage the inner surface of the workpieces 10.

In the illustrated case where the system is used to treat the prismatic metal casings of electric car batteries, the complete removal of lubricant residues and metal particles from their inner and outer surfaces is achieved.

Preferably, bag filters are also used to retain the metal particles removed from the dirty parts.

The drying station 40 can include a drying oven with a specially configured air circulation system to ensure complete drying of the inside of the enclosures, solving the problem of the 'bell' effect.

In practice, the air circulation system is configured to achieve a Venturi effect on the parts in order to extract the moist air inside them.

The endless conveyor with two parallel chains and the parts processing plant incorporating it thus conceived are susceptible to numerous modifications and variants, all of which fall within the scope of the inventive concept; moreover, all details are replaceable by technically equivalent elements.

In practice, the materials used, as well as the dimensions, can be any according to requirements and the state of the art.

## Claims

1. Endless conveyor (1) with two parallel chains (2) having an upper outward branch (1a) operative for advancing hollow workpieces (10) along a conveying direction (L) and a lower empty return branch (1b), said two parallel chains (2) being orthogonally connected by support bars (3) for supporting the hollow workpieces (10), **characterised by** the fact that the support bar (3) is formed by a longitudinal profile (4) shaped with an open cross-section from which spaced out shelves (5) project supporting pegs (6) for resting the hollow workpieces (10).

2. Endless conveyor (1) according to claim 1, **characterised by** the fact that said shelves (5) extend from a free longitudinal edge (7) of said shaped longitudinal profile (4).

3. Endless conveyor (1) according to any previous claim, **characterised by** the fact that said longitudinal profile (4) has an open 'C'-shaped section.

4. Endless conveyor (1) according to any one of claims 2 and 3, **characterised by** the fact that said shelves (5) are arranged in succession along said free longitudinal edge (7) of said shaped longitudinal profile (4) according to at least two different spacing pitches (P1, P2) which are repeated periodically.

5. Endless conveyor (1) according to any previous claim, **characterised by** the fact that said pegs (6) extend orthogonally from said shelves (5).

6. Endless conveyor (1) according to any previous claim, **characterised by** the fact that said pegs (6) have bevelled ends (12) to support the hollow pieces (10).

7. Endless conveyor (1) according to any preceding claim, **characterised by** the fact that said pegs (6) extend from the free end (14) of said shelves (5).

8. Endless conveyor (1) according to the preceding claim, **characterised by** the fact that said free end (14) of said shelves (5) is in a backward position in a direction opposite to said transport direction (L) with respect to said shaped longitudinal profile (4) or in a forward position in said transport direction (L) with respect to said shaped longitudinal profile (4).

9. Endless conveyor (1) according to any preceding claim, **characterised by** the fact that flanges (8) attached to counter flanges (9) supported by opposing links (11) of said two chains (2) extend from the ends of said support bar (3).

10. A hollow piece treatment plant (10) comprising one or more treatment stations successively fed by an endless conveyor (1) according to any preceding claim, wherein a treatment station comprises a combined internal and external washing station of the hollow pieces (10) comprising first spray nozzles (13) positioned above said upper branch (1a) of the conveyor (1) and oriented vertically downwards and second spray nozzles (13') positioned below said upper branch (1a) of the conveyor (1) and oriented vertically upwards and by the fact that a longitudinal series of transverse rows of said first nozzles (13) and a longitudinal series of transverse rows of said second nozzles (13') are provided in the transport direction (L), wherein homologous transverse rows of said first nozzles (13) and said second nozzles (13') are aligned in a vertical plane (V).

11. A hollow workpiece processing plant according to the preceding claim, **characterised by** the fact that the moving workpieces (10) pass through said vertical plane (V) before or after the support bar (3) which supports them has completely passed through said vertical plane (V).

12. Treatment plant according to any of claims 10 and 11 for use in the treatment of prismatic cases of electric car batteries.
